# EUROPÄISCHE PATENTANMELDUNG

(11) **EP 1 630 675 A2**
(43) Veröffentlichungstag der Anmeldung: **01.03.2006**
(21) Anmeldenummer: 05105909.5
(22) Anmeldetag: 30.06.2005
(51) Int. Cl.: G06F 11/273

(54) **Funktionseinheit zur Ausführung von logischen Testfällen auf einem an eine zu prüfende Einheit angekoppelten Testsystem und entsprechendes Verfahren**

(30) Priorität: 27.08.2004 DE 102004041822
(71) Anmelder: ROBERT BOSCH GMBH, 70442 Stuttgart (DE)
(72) Erfinder: Holzapfel, Gerald, 71672, Marbach (DE); Kretschmer, Bernd, 70499, Stuttgart (DE); Lebert, Klaus, 70372, Stuttgart (DE); Wolters, Ulrich, 70435, Stuttgart (DE); Filp, Gerhard, 71691, Freiberg (DE); Oezaslan, Hakan, 71636, Ludwigsburg (DE); Traenkle, Frank, 71729, Erdmannhausen (DE); Meyer, Juergen, 72144, Dusslingen (DE); Allmendinger, Tilo, 74629, Pfedelbach (DE); Gross, Uwe, 71287, Weissach (DE); Bayerl, Alexander, 71549, Auenwald-Hohenweiler (DE); Goebel, Sven, 70499, Stuttgart (DE)

(57) **Zusammenfassung**

Die vorliegende Erfindung betrifft eine Funktionseinheit (10) zur Ausführung von logischen Testfällen (40_A, 40_B, 40) auf einem an eine zu prüfende Einheit (50) angekoppeltes Testsystem (32), wobei die Funktionseinheit (10) dazu geeignet ist, zwischen die logischen Testfälle (40_A, 40_B, 40) und das Testsystem (32) derart zwischengeschaltet zu werden, daß die logischen Testfälle (40_A, 40_B, 40) von dem Testsystem (32) entkoppelt werden, und dabei als Mediator eine Ausführung der logischen Testfälle (40_A, 40_B, 40) auf dem Testsystem (32) zu unterstützen.

## Beschreibung

Die vorliegende Erfindung betrifft eine Funktionseinheit zur Ausführung von logischen Testfällen auf einem an eine zu prüfende Einheit angekoppelten Testsystem. Ferner betrifft die vorliegende Erfindung ein entsprechendes Verfahren.

### Stand der Technik

Automatisierte Tests für elektronische Steuerungen sind heute weitreichend eingeführt und bekannt. Zur Automatisierung derartiger Tests werden verschiedene Techniken, Geräte und Strategien unterschiedlicher Hersteller bzw. Eigenentwicklungen eingesetzt. Dabei sind die notwendigen Schnittstellen zwischen den Testfällen, die die automatisierten Tests implementieren, und dem Testsystem, die den Zugang zu der zu prüfenden Einheit, im folgenden als Prüfling bezeichnet, herstellen, herstellerspezifisch und proprietär.

Dabei kommt es zu einer Reihe von Problemen. Zum einen können Testfälle nicht unabhängig vom eingesetzten Testsystem entwickelt werden. Eine Änderung oder ein Austausch des verwendeten Testsystems macht im allgemeinen eine Anpassung der Testfälle notwendig. Eine derartige Anpassung ist unter Umständen sehr aufwendig, da die Testfälle im allgemeinen direkt die proprietären Schnittstellen der Testsysteme aufrufen und die Schnittstellen der jeweiligen Testsysteme sich wesentlich voneinander unterscheiden. Eine Erstellung von logischen Testfällen, die unabhängig von einem jeweiligen Testsystem sind, ist dadurch erschwert. Ein Austausch von Tests bzw. Testfällen zwischen Steuergeräteherstellern und deren Kunden ist nur dann einfach möglich, wenn beide Partner identische Testsysteme verwenden. Eine Wiederverwendung von Testfällen ist dabei sehr stark eingeschränkt.

Ferner ist aber auch eine Wiederverwendung von Testsystemen nicht ohne weiteres möglich. Testfälle müssen in einer Testbeschreibungssprache oder einer Testablaufsteuerung realisiert sein, die von dem verwendeten Testsystem unterstützt werden. Wird eine Testbeschreibungssprache oder eine Testablaufsteuerung von dem verwendeten Testsystem nicht unterstützt, dann muß zunächst eine aufwendige Übertragung bzw. Portierung der Testfälle in die von dem Testsystem unterstützte Sprache bzw. Ablaufsteuerung erfolgen, bevor das Testsystem für den bereits vorhanden Test bzw. den Testfall verwendet werden kann. Unter Umständen ist eine derartige Portierung sehr aufwendig oder technisch nicht möglich, so daß das Testsystem für den Test bzw. für die Testfälle nicht eingesetzt werden kann.

Darüber hinaus ist in vielen bekannten Lösungen ein Testfall zudem streng an eine bestimmte Variante der zu prüfenden Einheit bzw. des Prüflings gekoppelt. So sind in diesen Testfällen bspw. konkrete physikalische Adressen zum Zugriff auf Ein-/Ausgangssignale des Prüflings codiert. Eine Wiederverwendung dieser Testfälle für verschiedene Varianten des Prüflings wird dadurch erschwert oder gar unmöglich.

Von ETSI (European Telecommunications Standards Institute) wurde eine Testbeschreibungssprache mit der Bezeichnung TTCN-3 in ETSI ES 201 873-1 bis -4 standardisiert. Diese Testsprache ermöglicht eine Erstellung von Testfällen unabhängig von einem dabei eingesetzten Testsystem. Auf das eingesetzte Testsystem wird über sogenannte Ports zugegriffen. Bei einem Port handelt es sich dabei um eine Menge von Signaturen, die im Folgenden als Testschritte bezeichnet werden. Ein Testschritt ist dabei eine bestimmte Funktion, die von einem Testfall aufgerufen werden kann, um einen Prüfling, wie beispielsweise ein elektronisches Steuergerät, zu stimulieren und zu vermessen. Dabei kann es sich beispielsweise um eine Funktion handeln, die einen Fehlerspeicher des Prüflings bzw. des Steuergerätes liest. TTCN-3 greift direkt über sogenannte System-Under-Test- und Platform-Adapter auf das eingesetzte Testsystem zu. Dabei sind die beiden Adapter, das heißt der System-Under-Test- und der Platform-Adapter, Bestandteile des aus TTCN-3 generierten ausführbaren Programms. Aufgrund dessen ist bei einer Veränderung des Testsystems auch eine neue Generierung des ausführbaren Programms notwendig. Ferner sind die aufrufbaren Testschritte auf die Testbeschreibungssprache TTCN-3 begrenzt.

### Vorteile der Erfindung

Gemäß der vorliegenden Erfindung wird nunmehr eine erfindungsgemäße Funktionseinheit gemäß Anspruch 1 und ein erfindungsgemäßes Verfahren gemäß Anspruch 10 bereitgestellt, mit deren Hilfe voranstehend genannte Probleme gelöst werden können. Weitere vorteilhafte Ausführungsformen sind in den entsprechenden Unteransprüchen aufgezeigt.

Gemäß Anspruch 1 wird eine Funktionseinheit zur Ausführung von logischen Testfällen auf einem an eine zu prüfende Einheit angekoppelten Testsystem bereitgestellt, wobei die Funktionseinheit dazu geeignet ist, zwischen die logischen Testfälle und das Testsystem derart zwischengeschaltet zu werden, daß die logischen Testfälle von dem Testsystem entkoppelt werden. Dabei unterstützt die Funktionseinheit in Form eines Mediators eine Ausführung der logischen Testfälle auf dem Testsystem.

Vorzugsweise ist die erfindungsgemäße Funktionseinheit dazu geeignet, eine Ausführung von logischen, testsystemunabhängigen Testfällen auf dem Testsystem zu unterstützen. Die erfindungsgemäße Funktionseinheit, im folgenden als Testsystem-Abstraktionsschicht (Test System Abstraction Layer TSAL) bezeichnet, entkoppelt die Testfälle von dem Testsystem. Testfälle können unabhängig von dem jeweiligen Testsystem entwickelt werden. Ein und derselbe Testfall ist somit auf verschiedenen Testsystemen auch verschiedener Hersteller ausführbar, ohne daß eine Anpassung oder ein erneutes Übersetzen des Testfalls nötig wäre.

In einer besonders bevorzugten Ausführungsform der erfindungsgemäßen Funktionseinheit weist die Funktionseinheit eine erste Schnittstelle zur Ankopplung von Testbeschreibungssprachen und/oder Testablaufsteuerungen, in welchen die logischen Testfälle realisiert sind, eine zweite Schnittstelle zur Registrierung von logischen testsystemunabhängigen Testschritten, die von den logischen Testfällen abrufbar sind und eine dritte Schnittstelle zur Ankopplung des Testsystems und zur Abbildung von Aufrufen von logischen Testschritten in Aufrufe an das Testsystem auf.

Testfälle für elektronische Steuergeräte stimulieren und vermessen den Prüfling, indem sie Testschritte aufrufen. Beispiele für derartige Testschritte sind Funktionen, die den Fehlerspeicher eines Steuergeräts lesen oder Funktionen, die eine Umgebungstemperatur oder eine Sollgeschwindigkeit eines Fahrzeugs setzen. Sogenannte Testwerkzeuge realisieren die Testschritte in Software oder Hardware. Die Gesamtheit aller Testwerkzeuge für ein Steuergerätetest wird als Testsystem bezeichnet. Der Zugriff auf den Prüfling, der in Hardware, in Software oder als ein Simulationsmodell vorliegen kann, erfolgt ausschließlich über derartige Testwerkzeuge. Im allgemeinen werden Testschritte, wie bereits eingangs erläutert, in Kategorien, sogenannte Ports, gruppiert. So werden bspw. alle Testschritte, die einen Zugriff auf eine Steuergerätdiagnose bewerkstelligen, in einem Port P_DIAG zusammengefaßt. Eine Zusammenfassung aller Testschritte zu einem Zugriff auf ein Fahrer-Fahrzeug-Umgebungs-Simulationsmodell ergibt einen Port P_MA. Ein derartiges Simulationsmodell wird zum Betrieb des Prüflings und als Testreferenz benötigt.

In einer weiteren bevorzugten Ausführungsform der erfindungsgemäßen Funktionseinheit sind über die erste Schnittstelle unter Verwendung jeweils geeigneter Adapter beliebige Testbeschreibungssprachen und/oder Testablaufsteuerungen ankoppelbar. Das bedeutet, daß Testfälle in beliebigen Testbeschreibungssprachen oder Testablaufsteuerungen implementiert werden können. Eine Ankopplung der Testbeschreibungssprachen und/oder der Testablaufsteuerung an die erfindungsgemäße Funktionseinheit erfolgt über sogenannte Test Language Adapter. Für jede Testbeschreibungssprache ist ein solcher Test Language Adapter zu implementieren. Die erste Schnittstelle wird auch als Test Language Interface bezeichnet, da über diese Schnittstelle eine Registrierung und Kommunikation mit den Test Language Adaptern stattfindet.

In einer weiteren bevorzugten Ausführungsform der erfindungsgemäßen Funktionseinheit sind über die zweite Schnittstelle einzelne und/oder in Kategorien gruppierte logische Testschritte deklarierbar und zur Ausführung von logischen Testfällen abrufbar. Die zweite Schnittstelle wird dabei als sogenannte Test Steps Interface bezeichnet.

In einer anderen bevorzugten Ausführungsform der erfindungsgemäßen Funktionseinheit sind über die dritte Schnittstelle unter Verwendung jeweils geeigneter Adapter beliebige, das Testsystem definierende Testwerkzeuge ankoppelbar. Durch eine Implementierung von sogenannten Tooladaptern wird somit die Möglichkeit gegeben, beliebige Testwerkzeuge an die erfindungsgemäße Funktionseinheit anzuschließen. Eine Registrierung und Kommunikation mit den Tool Adaptern erfolgt über die dritte Schnittstelle, die als Tool Adapter Interface bezeichnet wird. Die Tool Adapter setzen Aufrufe an die Testschritte in konkrete Funktionsaufrufe an die Testwerkzeuge um. Ein Tool Adapter entspricht somit einer konkreten Ausprägung eines oder mehrerer Ports.

Vorzugsweise ist ferner eine Verschaltung von an die Funktionseinheit angekoppelten einzelnen und/oder in Kategorien gruppierten logischen Testschritten und an die Funktionseinheit angekoppelten Testwerkzeugen konfigurierbar. Für eine Veränderung der Verschaltung ist dabei weder ein Anpassung der Testfälle noch eine Anpassung der Testwerkzeuge bzw. der entsprechenden Tooladapter notwendig.

In einer weiteren bevorzugten Ausführungsform der erfindungsgemäßen Funktionseinheit ist eine Funktionalität vorgesehen, mittels welcher von logischen Testfällen verwendete logische Adressen in physikalische Adressen abbildbar sind. Bei Einsatz einer erfindungsgemäßen Funktionseinheit werden in den Testfällen abstrakte logische Adressen verwendet. Die erfindungsgemäße Funktionseinheit bildet nun diese logischen Adressen in physikalische Adressen ab. Dies erfolgt vorzugsweise über konfigurierbare Übersetzungstabellen. Diese wiederum sind der Funktionseinheit hinterlegt.

Darüber hinaus ist vorzugsweise eine Funktionalität vorgesehen, mittels welcher eine Umrechnung von physikalischen Einheiten vornehmbar ist. Das bedeutet, daß in den Testfällen physikalische Einheiten für Parameter und Variablen verwendet werden können, unabhängig davon, welche Einheiten in den Testwerkzeugen verwendet werden. Die Umrechnung der Einheiten erfolgt in der erfindungsgemäßen Funktionseinheit. Somit entkoppelt die erfindungsgemäße Funktionseinheit Testfälle vom konkreten Prüfling. Testfälle können für Prüflinge in verschiedenen Entwicklungsversionen und in verschiedenen Konfigurationen wiederverwendet werden. So kann bspw. ein Fahrzeugdynamik-Steuergerät für verschiedene Fahrzeugtypen verwendet werden. Mittels der erfindungsgemäßen Funktionseinheit wird ein Aufbau einer Bibliothek von wiederverwendbaren logischen Testfällen ermöglicht. Bei der Wiederverwendung der Testfälle ist keine Anpassung der Testfälle nötig. Vorzugsweise erfolgt dabei die Umrechnung automatisch, damit z.B. in einem Testfall als Einheit für die Geschwindigkeit "m/s" und in einem Simulationsmodell innerhalb des Testsystems "km/h" verwendet werden kann. Der Testfall muss die im Simulationsmodell verwendete Einheit nicht kennen.

Ferner betrifft die vorliegende Erfindung ein Verfahren zur Ausführung von logischen Testfällen auf einem an einer zu prüfenden Einheit angekoppelten Testsystem. Dabei wird eine Funktionseinheit zwischen die logischen Testfälle und das Testsystem derart zwischengeschaltet, daß die logischen Testfälle von dem Testsystem und der zu prüfenden Einheit entkoppelt werden.

Vorzugsweise wird als Funktionseinheit eine erfindungsgemäße, vorab beschriebene Funktionseinheit verwendet.

In einer weiteren besonders bevorzugten Ausführungsform des erfindungsgemäßen Verfahrens werden über die zweite Schnittstelle der Funktionseinheit einzelne und/oder in Kategorien gruppierte logische Testschritte deklariert zur Ausführung von logischen Testfällen bereitgestellt.

Das erfindungsgemäße Computerprogramm umfaßt Programmcodemittel zur Durchführung des Verfahrens. Diese Programmcodemittel sind bspw. auf einem computerlesbaren Datenträger gespeichert. Das erfindungsgemäße Verfahren sowie die erfindungsgemäße Funktionseinheit sind unabhängig davon, in welchem Entwicklungsstadium sich die zu prüfende Einheit bzw. der Prüfling befindet. Das bedeutet, daß der Prüfling als Steuergerät in Hardware vorliegen kann oder eine Komponente der Steuergerätesoftware oder ein Simulationsmodell des Steuergerätes sein kann.

Weitere Vorteile der vorliegenden Erfindung werden anhand der folgenden Figuren näher erläutert. Es zeigen
Figur 1 schematische Darstellung einer Ausführungsform des erfindungsgemäßen Verfahrens;
Figur 2 schematische Darstellung einer weiteren Ausführungsform des erfindungsgemäßen Verfahrens.

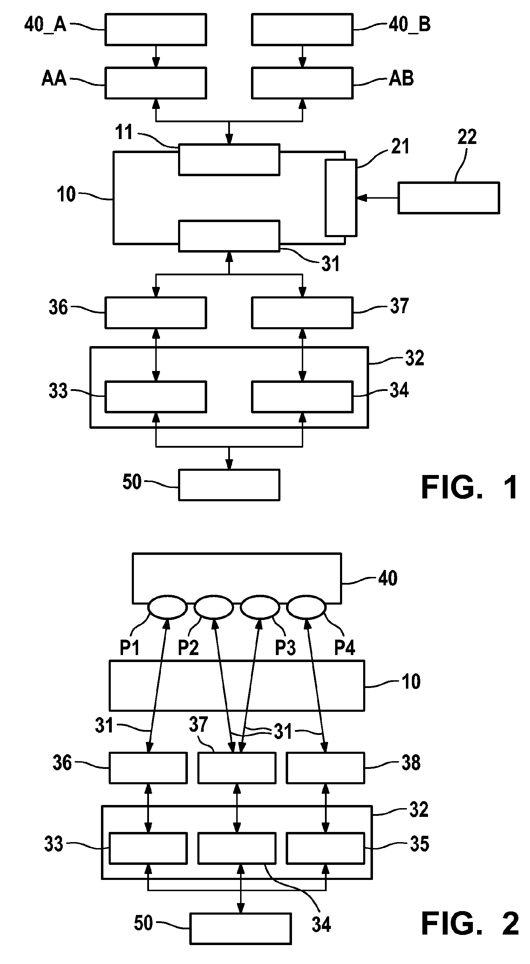

Figur 1 zeigt eine erfindungsgemäße Funktionseinheit TSAL 10. TSAL 10 verfügt über drei Schnittstellen. Die erste Schnittstelle 11 dient dabei zur Ankopplung von beliebigen Testbeschreibungssprachen oder Testablaufsteuerungen, in welchen die logischen Testfälle realisiert werden. Zur Ankopplung eines Testfalls 40_A, der in einer Testbeschreibungssprache A realisiert ist, wird der Schnittstelle 11 ein sogenannter Test Language Adapter AA vorgeschaltet. Zur Ankopplung eines Testfalls 40_B, der in einer Testbeschreibungssprache B realisiert ist, wird ferner ein sogenannter Test Language Adapter AB der Schnittstelle 11 vorgeschaltet. Eine zweite Schnittstelle 21 dient einer Registrierung von logischen, testsystemunabhängigen Testschritten, die von logischen Testfällen aus aufgerufen werden können. Über die Schnittstelle 21, die auch als Test Steps Interface bezeichnet wird, wird die Möglichkeit gegeben, Ports und deren Testschritte 22 zu deklarieren. Die Ports und Testschritte 22 können nach erfolgter Deklaration von den Testfällen verwendet, das heißt aufgerufen werden. Über die dritte Schnittstelle 31 wird ein Testsystem 32 angekoppelt. Im vorliegenden Fall wird das Testsystem 32 durch ein Testwerkzeug 33 und ein Testwerkzeug 34 gebildet. Die Testwerkzeuge 33 und 34 werden durch entsprechende Tool Adapter 36 und 37 an die Funktionseinheit 10 angeschlossen. Die Registrierung und Kommunikation mit den Tool Adaptern 36, 37 erfolgt über die dritte Schnittstelle 31, die auch als Tool Adapter Interface bezeichnet wird. Die Tool Adapter 36, 37 setzen Aufrufe an die Testschritte (22) in konkrete Funktionsaufrufe an die Testwerkzeuge 33, 34 um. Ein Tool Adapter entspricht einer konkreten Ausprägung eines oder mehrerer Ports.

In Figur 2 ist ebenfalls die Funktionseinheit TSAL 10 dargestellt. Ferner sind vier Ports P1, P2, P3 und P4 gezeigt, die von einem logischen Testfall 40 verwendet werden. Ferner ist die Funktionseinheit 10 über die Schnittstelle 31 an drei verschiedene Tool Adapter 36, 37, 38 angeschlossen, die wiederum mit entsprechenden das Testsystem 32 bildenden Testwerkzeugen 33, 34, 35 verbunden sind. Über die Testwerkzeuge 33, 34, 35 erfolgt letztlich der Zugriff auf die zu prüfende Einheit 50. Innerhalb der Funktionseinheit TSAL 10 ist es nun möglich, eine Zuordnung der einzelnen Ports P1, P2, P3, P4 zu den einzelnen Testwerkzeugen 33, 34, 35 zu konfigurieren. Es findet somit eine Verschaltung von Ports P1, P2, P3, P4 mit entsprechenden Tool Adaptern 36, 37, 38 statt, was durch dünne Pfeile kenntlich gemacht ist. Im hier dargestellten Fall wird der Port P1 über den Tool Adapter 36 mit dem Testwerkzeug 33 verschaltet. Der Port P2 und der Port P3 werden über den Tool Adapter 37 mit dem Testwerkzeug 34 und der Port P4 über den Tool Adapter 38 mit dem Testwerkzeug 35 gekoppelt. Die eigentliche Verschaltung erfolgt dabei innerhalb der Funktionseinheit 10. Für eine Veränderung der vorgenommenen Verschaltung ist weder eine Anpassung des Testfalles 40 noch eine Anpassung der Tool Adapter 36, 37, 38 notwendig, da die Verschaltung ausschließlich innerhalb der Funktionseinheit TSAL 10 vorgenommen wird. Die Testwerkzeuge 33, 34, 35 und deren Konfiguration können ausgetauscht werden, ohne den Testfall 40 anpassen zu müssen. Ein einmal erstellter Testfall 40 ist somit auf beliebigen Testwerkzeugen 33, 34, 35 lauffähig, solange die Testwerkzeuge 33, 34, 35 von der Funktionseinheit TSAL 10 unterstützt werden. Logische Adressen, die in dem Testfall 40 verwendet werden, werden mittels der Funktionseinheit TSAL 10 in physikalische Adressen abgebildet. Dadurch wird eine Entkopplung des Testfalls 40 sowohl von den Testwerkzeugen 33, 34, 35 als auch von der konkreten Ausführung der zu prüfenden Einheit 50 erreicht. Beispiel für eine logische Adresse wäre "vehicle speed", die in die physikalische Adresse "model.vehicle.speed" abgebildet wird. Ferner werden innerhalb der Funktionseinheit TSAL 10 von dem Testfall 40 verwendete physikalische Einheiten für Parameter und Variablen automatisch umgewandelt, so daß sie von den Testwerkzeugen 33, 34, 35 verwendet werden können. Das bedeutet, daß physikalische Einheiten automatisiert umgewandelt werden, damit bspw. in dem Testfall 40 als Einheit für die Geschwindigkeit "m/s" und in einem Simulationsmodell innerhalb des Testsystems 32 "km/h" verwendet werden kann. Der Testfall 40 muß dabei die im Simulationsmodell verwendete Einheit nicht kennen.

## Patentansprüche

1. Funktionseinheit (10) zur Ausführung von logischen Testfällen (40) auf einem an eine zu prüfende Einheit (50) angekoppelten Testsystem (32), wobei die Funktionseinheit (10) dazu geeignet ist, zwischen die logischen Testfälle (40) und das Testsystem (32) derart zwischengeschaltet zu werden, daß die logischen Testfälle (40_A, 40_B, 40) von dem Testsystem (32) entkoppelt werden, und dabei als Mediator eine Ausführung der logischen Testfälle (40_A, 40_B, 40) auf dem Testsystem (32) zu unterstützen.

2. Funktionseinheit nach Anspruch 1, bei der die Funktionseinheit (10) dazu geeignet ist, eine Ausführung von logischen, testsystemunabhängigen Testfällen (40_A, 40_B, 40) auf dem Testsystem (32) zu unterstützen.

3. Funktionseinheit nach einem der Ansprüche 1 oder 2, bei der die Funktionseinheit (10) eine erste Schnittstelle (11) zur Ankopplung von Testbeschreibungssprachen und/oder Testablaufsteuerungen (A, B), in welchen die logischen Testfälle (40_A, 40_B, 40) realisiert sind,
eine zweite Schnittstelle (21) zur Registrierung von logischen testsystemunabhängigen Testschritten (22), die von den logischen Testfällen (40_A, 40_B, 40) abrufbar sind, und
eine dritte Schnittstelle (31) zur Ankopplung des Testsystems (32) und zur Abbildung von Aufrufen von logischen Testschritten (22) in Aufrufe an das Testsystem (32) aufweist.

4. Funktionseinheit nach einem der vorhergehenden Ansprüche, bei der über die erste Schnittstelle (11) unter Verwendung jeweils geeigneter Adapter (AA, AB) beliebige Testbeschreibungssprachen (A, B) und/oder Testablaufsteuerungen ankoppelbar sind.

5. Funktionseinheit, bei der über die zweite Schnittstelle (21) einzelne und/oder in Kategorien gruppierte logische Testschritte (22) deklarierbar und zur Ausführung von logischen Testfällen (40_A, 40_B, 40) abrufbar sind.

6. Funktionseinheit nach einem der vorhergehenden Ansprüche, bei der über die dritte Schnittstelle (31) unter Verwendung jeweils geeigneter Adapter (36, 37, 38) beliebige, das Testsystem (32) definierende Testwerkzeuge (33, 34, 35) ankoppelbar sind.

7. Funktionseinheit nach einem der vorhergehenden Ansprüche, bei der eine Verschaltung von angekoppelten einzelnen und/oder in Kategorien gruppierten logischen Testschritten (22) und angekoppelten Testwerkzeugen (33, 34, 35) konfigurierbar ist.

8. Funktionseinheit nach einem der vorhergehenden Ansprüche, bei der eine Funktionalität vorgesehen ist, mittels welcher von logischen Testfällen (40_A, 40_B, 40) verwendete logische Adressen in physikalische Adressen abbildbar sind.

9. Funktionseinheit nach einem der vorhergehenden Ansprüche, bei der eine Funktionalität vorgesehen ist, mittels welcher eine Umrechnung von physikalischen Einheiten vornehmbar ist.

10. Verfahren zur Ausführung von logischen Testfällen (40) auf einem an einer zu prüfenden Einheit (50) angekoppelten Testsystem (32), wobei eine Funktionseinheit (10) zwischen die logischen Testfälle (40_A, 40_B, 40) und das Testsystem (32) derart zwischengeschaltet wird, daß die logischen Testfälle (40_A, 40_B, 40) von dem Testsystem (32) und der zu prüfenden Einheit (50) entkoppelt werden.

11. Verfahren nach Anspruch 10, bei dem als Funktionseinheit (10) eine Funktionseinheit nach einem der Ansprüche 1 bis 9 verwendet wird.

12. Verfahren nach Anspruch 11, bei dem über die zweite Schnittstelle (21) der Funktionseinheit (10) einzelne und/oder in Kategorien gruppierte logische Testschritte (22) deklariert und zur Ausführung von logischen Testfällen (40_A, 40_B, 40) bereitgestellt werden.

13. Computerprogramm mit Programmcodemitteln, um alle Schritte eines Verfahrens nach einem der Ansprüche 10 bis 12 durchzuführen, wenn das Computerprogramm auf einem Computer ausgeführt wird.

14. Computerprogrammprodukt mit Programmcodemitteln, die auf einem computerlesbaren Datenträger gespeichert sind, um ein Verfahren nach einem der Ansprüche 10 bis 12 durchzuführen, wenn das Computerprogramm auf einem Computer ausgeführt wird.
